# EUROPÄISCHE PATENTANMELDUNG

(11) **EP 1 381 014 A2**
(43) Veröffentlichungstag der Anmeldung: **14.01.2004**
(21) Anmeldenummer: 03015407.4
(22) Anmeldetag: 09.07.2003
(51) Int. Cl.: G09G 3/20

(54) **Verfahren und Vorrichtung zur Bildverbesserung bei einer Darstellung MPEG2-codierter Videosignale auf einem matrixadressierten Display**

(30) Priorität: 13.07.2002 DE 10231754
(71) Anmelder: Grundig AG, 90471 Nürnberg (DE)
(72) Erfinder: Fischbeck, Udo, 90766 Fürth (DE); Silverberg, Michael, Dr., 90403 Nürnberg (DE)

(57) **Zusammenfassung**

Die Erfindung betrifft ein Verfahren und eine Vorrichtung zur Bildverbesserung bei einer Darstellung MPEG2-codierter Videosignale auf einem matrixadressierten Display. Aus einem übertragenen, MPEG2-codierte Videosignale aufweisenden Datenstrom werden die einem gewünschten Videosignal entsprechenden digitalen Daten separiert und decodiert. Die decodierten Daten werden in R,G,B-Signale umgewandelt. Die R,G,B-Signale werden einem Dithervorgang unterworfen. Dieser Dithervorgang wird an den den Blockgrenzen des MPEG2-codierten Videosignals entsprechenden Signalübergängen verstärkt, um im wiedergegebenen Bild die Sichtbarkeit von Blockeffekten zu verringern.

## Beschreibung

Die Erfindung betrifft ein Verfahren und eine Vorrichtung zur Bildverbesserung bei einer Darstellung MPEG2-codierter Videosignale auf einem matrixadressierten Display, beispielsweise einem Plasmadisplay.

Plasmadisplays sind bereits bekannt. Deren Aufbau und Funktionsweise sind beispielsweise in dem Aufsatz "Plasma-Displays in Fernseh- und Multimedia-Endgeräten" von H. Kraus, veröffentlicht in der Zeitschrift FERNSEH- UND KINO-TECHNIK, 52. Jahrgang, Nr. 11/1998, Seiten 662 - 668, beschrieben. Das dort gezeigte Plasmadisplay besteht aus zwei parallelen Glasflächen, deren Zwischenraum mit einem Edelgasgemisch gefüllt ist. Die Frontscheibe des Displays ist innen mit transparenten Steuerelektroden benetzt. In den Zwischenräumen befinden sich Abstandsstreifen und darüber eine Schutzschicht. Die hintere Scheibe trägt die Adresselektroden und für jedes Pixel eine rote, eine grüne und eine blaue Leuchtstoffschicht, wobei diese Schichten durch dünne Stege voneinander getrennt sind. Der Aufbau eines Pixels besteht folglich immer aus drei Farbstoffzellen. Mittels einer Ansteuerelektronik kann an die Adresselektroden und über X- und Y-Busleitungen Spannung an die Elektroden einer jeden einzelnen Zelle angelegt werden. Die Adresselektrode dient zum Vorinitialisieren einer Zelle, die im nächsten Zyklus leuchten soll. Eine nicht adressierte Zelle bleibt im folgenden Zyklus dunkel. Die an den Busleitungen anliegende Spannung löst die elektrische Oberflächenentladung auf der Isolierschicht aus. Dabei geht das Gas in den Plasmazustand über, um UV-Licht zu erzeugen, das die Leuchtstoffschicht der einzelnen Zellen zum Leuchten bringt.

Aus der DE 100 09 858 A1 sind ein Verfahren und eine Vorrichtung zur Verbesserung des Kontrasts einer pulsbreitengesteuerten Bildanzeigevorrichtung, beispielsweise eines Plasmadisplays, bekannt. Dort werden mittels einer Steuereinrichtung in Abhängigkeit von der ermittelten Helligkeit eines darzustellenden Bildes die maximal zulässigen Leuchtdauern in den einzelnen Teilzeitintervallen vorgegeben. Bei Änderungen der erfassten Helligkeit erfolgt eine Veränderung der maximal zulässigen Leuchtdauer derart, dass Teilzeitintervalle mit niedriger Wertigkeit geringeren Änderungen der maximal zulässigen Leuchtdauer unterliegen als Teilzeitintervalle mit höherer Wertigkeit.

In der DE 100 61 451 ist eine Vorrichtung zur Verarbeitung von RGB-Signalen bei einem digital angesteuerten Display bekannt, beispielsweise einem Plasmadisplay. Die Vorrichtung weist eine Schaltung zur Entzerrung von vorverzerrten RGB-Signalen und ein Display auf. Zwischen der Schaltung zur Entzerrung und dem Display ist weiterhin eine Korrektureinheit vorgesehen, die zur Reduzierung von Farbübersättigungen dient.

In der DE 101 27 132 sind ein Verfahren und eine Vorrichtung zur Darstellung von gammavorverzerrten RGB-Signalen mittels eines digital angesteuerten Displays beschrieben. Dabei wird das für eine Bilddarstellung zur Verfügung stehende Zeitintervall in aufeinanderfolgende gewichtete Teilzeitintervalle aufgeteilt und die den Bildpunkten des darzustellenden Bildes zugehörigen Helligkeitssignale durch Umwandlung in den Teilzeitintervallen zugeordnete Aktivierungssequenzen erzeugt. Die Dauer der Teilzeitintervalle wird derart gewählt, dass die mittels des Displays dargestellten RGB-Signale gammaentzerrt sind.

Lineare 8-Bit-Displays, wie beispielsweise Plasmadisplays oder LCD's, haben in dunklen Bildbereichen eine sichtbare Abstufung im Helligkeitsverlauf. Insbesondere dann, wenn eine durchgängige digitale Signalverarbeitung vom Farbdecoder bis zum Display erfolgt, tritt diese Abstufung für das menschliche Auge störend in Erscheinung. Diese Abstufung ist darauf zurückzuführen, dass bei den bekannten Displays im Rahmen einer Gammaentzerrung durch ein Quantisieren auf 8 Bits Helligkeitsstufen verloren gehen. So entsteht beispielsweise aus vier Helligkeitsstufen durch die Quantisierung nur eine einzige Helligkeitsstufe.

Um die störende Wirkung der genannten Abstufung zu verringern, ist es bereits bekannt, bei der im Rahmen der Gammaentzerrung erfolgenden Quantisierung zusätzliche Bits zu berechnen und diese in Form eines Ditherns darzustellen. Dabei wird ein digitales Videosignal einem Gammaentzerrer zugeführt. Dessen Aufgabe besteht darin, das senderseitig gammavorverzerrte Videosignal zu entzerren. Das Ausgangssignal des Gammaentzerrers wird einer Ditherschaltung zugeführt. Deren Ausgangssignal wird an das Display weitergeleitet und auf diesem angezeigt. Die im Rahmen der Gammaentzerrung zusätzlich berechneten Bits werden in der Ditherschaltung in gewichtete Rauschgeneratorsignale umgesetzt, die dem für das Display vorgesehenen 8-Bit-Signal überlagert werden. Beim Betrachten eines derartigen Bildes integriert das menschliche Auge die generierten Signale. Dabei entstehen für das menschliche Auge zusätzliche Helligkeitsstufen, so dass die als störend empfundenen großen Abstufungen nicht mehr vorliegen.

Weiterhin sind in der DE 101 61 718.6 ein Verfahren und eine Vorrichtung zur Verbesserung der Bildqualität dunkler Bildbereiche bei einem Plasmadisplay beschrieben. Diesem ist ein Gammaentzerrer vorgeschaltet, in welchem eine Quantisierung des Signals auf eine vorgegebene Bitzahl erfolgt. Vor oder hinter dem Gammaentzerrer werden zusätzliche Helligkeitszwischenstufen zwischen den durch die vorgegebene Bitzahl darstellbaren Helligkeitsstufen generiert. Dadurch wird die grobe Stufigkeit der Helligkeitsübergänge in dunklen Bildbereichen beseitigt.

Ferner ist es bereits bekannt, digitale Videosignale in einem MPEG2-Transportstrom zu übertragen, auf der Empfangsseite die einer gewünschten Fernsehsendung entsprechenden Daten aus dem Transportstrom zu separieren, zu decodieren und auf einem Display, beispielsweise einem Plasmadisplay, darzustellen. Dabei ist die Bandbreite des MPEG2-Transportstroms für die Bildqualität des auf dem Display dargestellten Bildes entscheidend. Ist diese Bandbreite reduziert, wie es beispielsweise bei einer terrestrischen Übertragung von digitalen Fernsehsignalen der Fall ist, dann ist die Bildqualität herabgesetzt.

Die Aufgabe der Erfindung besteht darin, einen Weg aufzuzeigen, wie bei einer Darstellung MPEG2-codierter Videosignale auf einem matrixadressierten Display die Bildqualität verbessert werden kann.

Diese Aufgabe wird durch ein Verfahren mit den im Anspruch 1 angegebenen Merkmalen und durch eine Vorrichtung mit den im Anspruch 4 angegebenen Merkmalen gelöst. Vorteilhafte Ausgestaltungen und Weiterbildungen der Erfindung ergeben sich aus den abhängigen Ansprüchen.

Die Vorteile der Erfindung bestehen darin, dass die bei einer Darstellung MPEG2-codierter Videosignale auf einem matrixadressierten Display an den Blockübergängen auftretenden Nichtlinearitäten weniger störend in Erscheinung treten, da sie durch eine Erhöhung der Ditherfunktion an den MPEG2-Blockgrenzen abgemildert bzw. weichgezeichnet werden. Zur Erhöhung der Ditherfunktion an den Blockgrenzen wird die Kenntnis über die Position der Blockgrenzen ausgenutzt. Weiterhin wird in vorteilhafter Weise bei der Erhöhung der Ditherfunktion der Kompressionsfaktor der MPEG2-codierten Signale berücksichtigt. Je größer dieser ist, desto stärker wird die Ditherfunktion eingestellt.

Weitere vorteilhafte Eigenschaften der Erfindung ergeben sich aus der nachfolgenden Erläuterung eines Ausführungsbeispiels anhand der Zeichnungen. Es zeigt
- Figur 1: ein Blockschaltbild eines ersten Ausführungsbeispiels für eine Vorrichtung zur Bildverbesserung bei einer Darstellung MPEG2-codierter Videosignale auf einem Plasmadisplay,
- Figur 2: Diagramme zur Veranschaulichung der Wirkungsweise der Vorrichtung gemäß Figur 1 und
- Figur 3: ein Blockschaltbild eines zweiten Ausführungsbeispiels für eine Vorrichtung zur Bildverbesserung bei einer Darstellung MPEG2- codierter Videosignale auf einem Plasmadisplay.

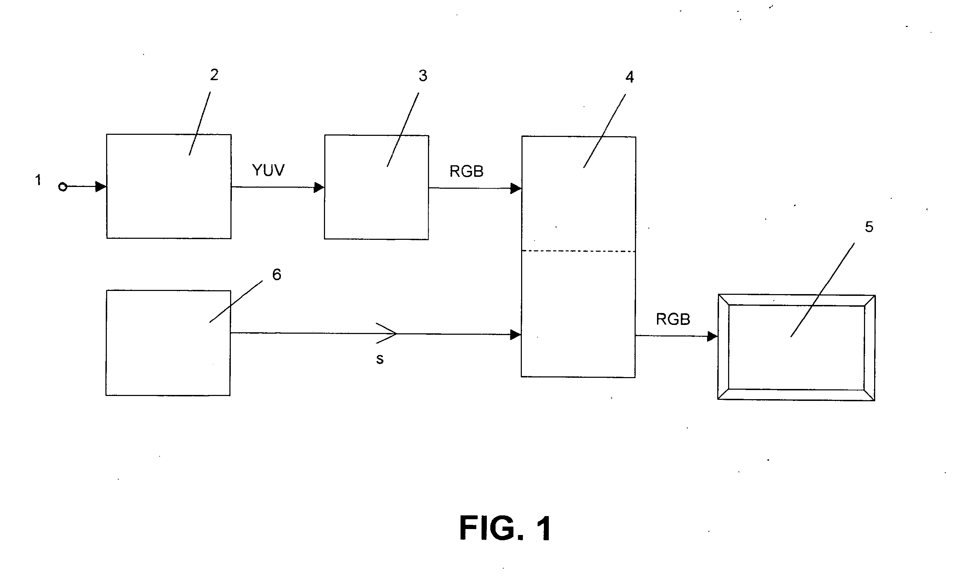

Die Figur 1 zeigt ein Blockschaltbild eines ersten Ausführungsbeispiels für eine Vorrichtung zur Bildverbesserung bei einer Darstellung MPEG2-codierter Videosignale auf einem Plasmadisplay.

Am Eingang 1 der gezeigten Vorrichtung liegt ein MPEG2-Datenstrom an, in welchem digitale Daten enthalten sind, die einer Vielzahl von Videosignalen zugehörig sind. Weiterhin werden im MPEG2-Datenstrom Zusatzinformationen zu jedem der Videosignale übertragen, welche das Kompressionsverhältnis des jeweiligen Videosignals angeben und zu welchen auch Informationen über die bei der MPEG2-Codierung verwendete Blockbildung enthalten sind, insbesondere Informationen über die Positionen der Blockgrenzen.

Der am Eingang 1 anliegende MPEG2-Datenstrom wird einem Schaltungsblock 2 zugeführt, welcher eine Abtrenneinheit zur Abtrennung der einem gewünschten Videosignal entsprechenden digitalen Daten aus dem MPEG2-Datenstrom aufweist. Weiterhin enthält der Schaltungsblock 2 einen MPEG2-Decoder, welcher zur Decodierung der abgetrennten, dem gewünschten Videosignal entsprechenden digitalen Daten vorgesehen ist. Diese Decodierung erfolgt unter Verwendung der Informationen über das Kompressionsverhältnis und der Informationen über die Positionen der Blöcke bzw. der Blockgrenzen.

Das decodierte Signal, welches in Form eines Y,U,V-Signals vorliegt, wird an eine Videosignalverarbeitungseinheit 3 weitergeleitet, in welcher unter anderem eine Umwandlung des Y,U,V-Signals in R,G,B-Signale erfolgt. Die R,G,B-Signale werden einer R,G,B-Signalverarbeitungseinheit 4 zugeführt, in welcher die R,G,B-Signale einem Dithervorgang unterworfen werden. Bei diesem Dithervorgang werden die R,G,B-Signale mit minimalem Räuschen überlagert, um die Sichtbarkeit von Helligkeitssprüngen im auf dem Display 5 gestellten Bild zu verringern.

Dieser Dithervorgang wird gemäß der vorliegenden Erfindung durch ein Steuersignal s zusätzlich beeinflusst. Das Steuersignal s wird in einem Steuersignalgenerator 6 erzeugt. Dessen Eingang ist mit dem MPEG2-Decoder 2 verbunden. Der MPEG2-Decoder liefert Informationen über den Kompressionsfaktor des Videosignals und auch Informationen über die Positionen der Blockgrenzen des MPEG2-codierten Videosignals an den Steuersignalgenerator 6. Dieser generiert das Steuersignal s, welches den Dithervorgang in der R,G,B-Verarbeitungseinheit 4 zusätzlich beeinflusst, in Abhängigkeit von den Informationen über die Positionen der Blockgrenzen und vorzugsweise auch in Abhängigkeit vom verwendeten Kompressionsfaktor.

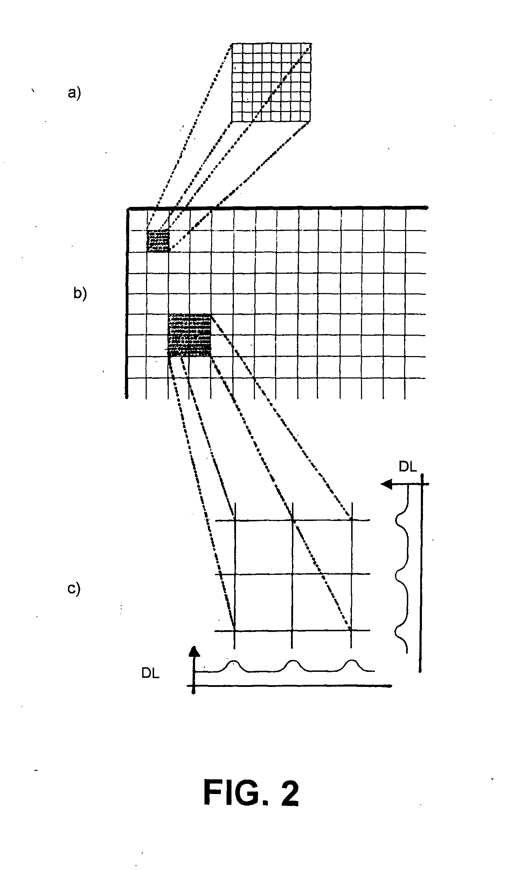

Dies wird nachfolgend anhand der Figur 2 näher erläutert, welche Diagramme zur Veranschaulichung der Wirkungsweise der Vorrichtung gemäß Figur 1 zeigt.

In der Figur 2a ist ein MPEG2-Block dargestellt, welcher 8 x 8 = 64 Bildpunkte aufweist. Die Figur 2b zeigt, dass sich ein am Display dargestelltes Bild aus Bildinformationen zusammensetzt, die aus einer Vielzahl von Blöcken abgeleitet ist, wobei die einzelnen Blöcke eine Vielzahl von Zeilen und eine Vielzahl von Spalten bilden. Die Figur 2c zeigt in etwas vergrößerter Form vier dieser Blöcke, zwischen denen jeweils Blockgrenzen bzw. Übergänge vorliegen. Weiterhin weisen die in der Figur 2c gezeigten Blöcke auch Blockgrenzen bzw. Übergänge zu weiteren Nachbarblöcken auf.

Die an diesen Blockübergängen auftretenden Nichtlinearitäten, die auf die im Rahmen der MPEG2-Codierung verwendete Blockbildung zurückzuführen sind, können im wiedergegebenen Bild visuell deutlich wahrnehmbar sein. Dies gilt insbesondere beim Vorliegen kritischer Bildinhalte, beispielsweise bei einem Kameraschwenk über ein Fußballstadion.

Um diese visuelle Wahrnehmbarkeit der Blockeffekte zu verringern, wird gemäß der vorliegenden Erfindung an Blockübergängen die Ditherfunktion verstärkt bzw. der Ditherpegel erhöht, wie es aus den Darstellungen des Ditherpegels DL auf der Unterseite und der rechten Seite der in der Figur 2c gezeigten Blöcke hervorgeht. Durch diese Verstärkung der Ditherfunktion werden die an den Blockübergängen auftretenden störenden Effekte abgemildert bzw. weichgezeichnet, so dass sie dem menschlichen Auge nicht mehr auffallen.

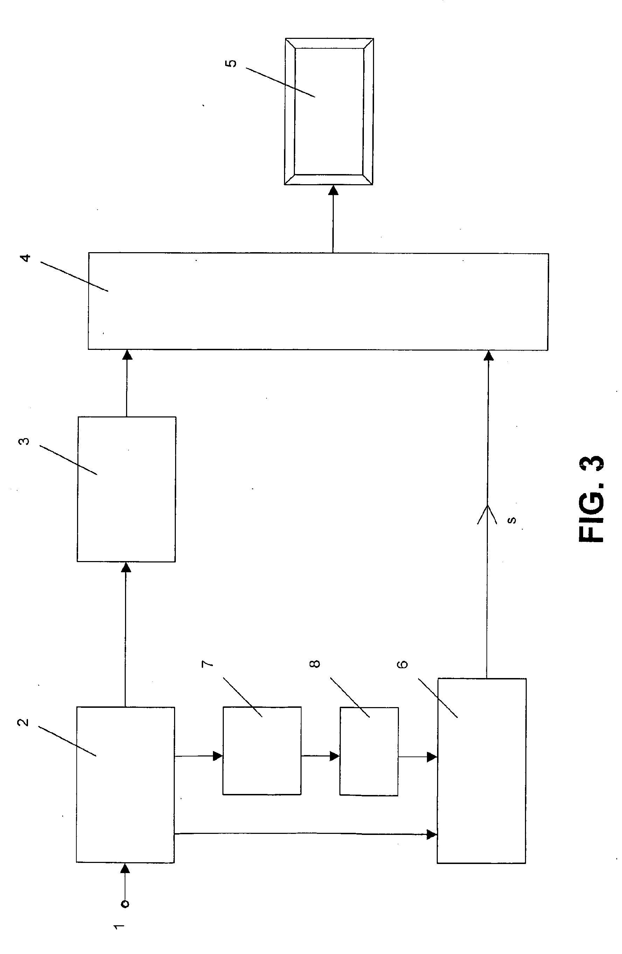

Die Figur 3 zeigt ein Blockschaltbild eines zweiten Ausführungsbeispiels für eine Vorrichtung zur Bildverbesserung bei einer Darstellung MPEG2-codierter Videosignale auf einem Plasmadisplay. Dieses zweite Ausführungsbeispiel unterscheidet sich von dem in der Figur 1 gezeigten ersten Ausführungsbeispiel dadurch, dass die Vorrichtung außer den in der Figur 1 dargestellten Schaltungsblöcken weiterhin einen Pegeldetektor 7 und einen Vergleicher 8 aufweist.

Bei diesem zweiten Ausführungsbeispiel berücksichtigt der Steuersignalgenerator 6 bei der Erzeugung des Steuersignals s zusätzlich Pegeldifferenzen zwischen benachbarten Blöcken.

Der Pegeldetektor 7 ist an den MPEG2-Decoder 2 angeschlossen und zur Detektion der Signalpegel an den Blockgrenzen horizontal und vertikal benachbarter Blöcke vorgesehen. Die mittels des Pegeldetektors 7 detektierten Signalpegel werden dem Vergleicher 8 zugeführt, der jeweils zugehörige Pegeldifferenzen ermittelt. Die ermittelten Pegeldifferenzen werden dem Steuersignalgenerator 6 zugeführt, der diese Pegeldifferenzen bei der Erzeugung des Steuersignals s berücksichtigt. Durch diese Berücksichtigung der Signalpegel in benachbarten Blöcken können die im . Bereich der Blockübergänge auftretenden Effekte weiter reduziert werden.

### Bezugszeichenliste:

- 1: Eingang für MPEG2-Datenstrom
- 2: Abtrenneinheit und MPEG2-Decoder
- 3: Videosignalverarbeitungseinheit
- 4: R,G,B-Signalverarbeitungseinheit
- 5: Plasmadisplay
- 6: Steuersignalgenerator
- 7: Pegeldetektor
- 8: Vergleicher

## Patentansprüche

1. Verfahren zur Bildverbesserung bei einer Darstellung MPEG2-codierter Videosignale auf einem matrixadressierten Display, wobei aus einem übertragenen, MPEG2-codierte Videosignale aufweisenden Datenstrom die einem gewünschten Videosignal entsprechenden digitalen Daten separiert und decodiert werden, die decodierten Daten in R,G,B-Signale umgewandelt und die R,G,B-Signale einem Dithervorgang unterworfen werden,
**dadurch gekennzeichnet, dass**
an den den Blockgrenzen des MPEG2-codierten Videosignals entsprechenden Signalübergängen der Dithervorgang verstärkt wird.

2. Verfahren nach Anspruch 1,
**dadurch gekennzeichnet, dass**
die Verstärkung des Dithervorgangs in Abhängigkeit vom Kompressionsfaktor des MPEG2-codierten Videosignals vorgenommen wird.

3. Verfahren nach Anspruch 1 oder 2,
**dadurch gekennzeichnet, dass**
an den Blockgrenzen die benachbarten Blöcken zugehörigen Signalpegel detektiert und miteinander verglichen werden und die Verstärkung des Dithervorgangs in Abhängigkeit der ermittelten Pegeldifferenz durchgeführt wird.

4. Vorrichtung zur Bildverbesserung bei einer Darstellung MPEG2-codierter Videosignale auf einem matrixadressierten Display, wobei aus einem übertragenen, MPEG2-codierte Videosignale aufweisenden Datenstrom die einem gewünschten Videosignal entsprechenden digitalen Daten separiert und decodiert werden, die decodierten Daten in R,G,B-Signale umgewandelt und die R,G,B-Signale einem Dithervorgang unterworfen werden, mit
- einer Abtrenneinheit zur Abtrennung der einem gewünschten Videosignal entsprechenden digitalen Daten aus einem MPEG2-codierten Datenstrom,
- einem MPEG2-Decoder zur Decodierung der dem gewünschten Videosignal entsprechenden digitalen Daten,
- einer Videosignalverarbeitungseinheit, in welcher die decodierten Daten in R,G,B-Signale umgewandelt werden und
- einer R,G,B-Signalverarbeitungseinheit, in welcher die R,G,B-Signale einem Dithervorgang unterworfen werden,
**dadurch gekennzeichnet, dass**
- sie weiterhin einen mit dem MPEG2-Decoder (2) verbundenen Steuersignalgenerator (6) aufweist, welchem von MPEG2-Decoder (2) Informationen über die Lage der Blockgrenzen im wiederzugebenden Bild zugeführt werden und welcher ausgangsseitig ein Steuersignal (s) für die R,G,B-Signalverarbeitungseinheit (4) zur Verfügung stellt und
- die R,G,B-Signalverarbeitungseinheit (4) den Dithervorgang in Abhängigkeit vom Steuersignal(s) verstärkt.

5. Vorrichtung nach Anspruch 4,
**dadurch gekennzeichnet, dass**
dem Steuersignalgenerator (6) vom MPEG2-Decoder (2) Informationen über den Kompressionsfaktor des MPEG2-codierten Videosignals zugeführt werden und der Steuersignalgenerator (6) das Steuersignal (s) in Abhängigkeit vom Kompressionsfaktor des MPEG2-codierten Videosignals erzeugt.

6. Vorrichtung nach Anspruch 4 oder 5,
**dadurch gekennzeichnet, dass**
sie einen Pegeldetektor (7) aufweist, welcher zur Detektion der Signalpegel an den Blockgrenzen benachbarter Blöcke vorgesehen ist, dass sie einen mit dem Pegeldetektor (7) verbunden Vergleicher (8) aufweist, der zur Ermittlung der Pegeldifferenz der detektierten Signalpegel vorgesehen ist, und dass der Steuersignalgenerator (6) das Steuersignal (s) in Abhängigkeit von der ermittelten Pegeldifferenz erzeugt.
